# FASCICULE DE BREVET EUROPEEN

(11) **EP 1 829 148 B1**
(45) Date de publication et mention de la délivrance du brevet: **16.10.2013**
(21) Numéro de dépôt: 05847991.6
(22) Date de dépôt: 20.12.2005
(51) Int. Cl.: H01M 8/10, H01M 8/12, H01M 8/24

(54) **PROCEDE DE FABRICATION D'UN ENSEMBLE POUR PILE A COMBUSTIBLE**
VERFAHREN ZUR HERSTELLUNG EINER BAUGRUPPE FÜR EINE BRENNSTOFFZELLE
METHOD FOR MAKING AN ASSEMBLY FOR A FUEL CELL

(30) Priorité: 23.12.2004 FR 0453212
(43) Date de publication de la demande: 05.09.2007
(73) Titulaire: Commissariat à l'Énergie Atomique et aux Énergies Alternatives, 75015 Paris (FR)
(72) Inventeur: COULON, Nadine, F-92120 Montrouge (FR); GIRAUD, Sophie, F-75014 Paris (FR)
(74) Mandataire: Ahner, Philippe
(86) Numéro de dépôt international: PCT/FR2005/051112
(87) Numéro de publication internationale: WO 2006/070150

(56) Documents cités:
- WO-A-03/071626
- DE-A1- 19 740 502
- US-A- 5 431 967
- US-A1- 2003 235 738

## Description

### DOMAINE TECHNIQUE

La présente invention se rapporte de façon générale à un procédé de fabrication d'un ensemble pour pile à combustible. Un tel procédé est par exemple connu du document US 2003/235738, divulguant les caractéristiques du préambule de la revendication 1.

L'invention concerne donc le domaine des piles à combustible, et plus particulièrement mais non exclusivement celui des piles à combustible de type à oxyde solide, dites piles SOFC (de l'anglais « Solid Oxide Fuel Cell »).

Ce type de piles à combustible est particulièrement bien adapté aux applications stationnaires, et aux unités de puissance auxiliaires (de l'anglais « Auxiliary Power Unit »).

### ÉTAT DE LA TECHNIQUE ANTÉRIEURE

Une pile à combustible est classiquement constituée par une pluralité d'unités de pile à combustible empilées, chaque unité étant constituée d'une plaque étanche également appelée plaque bipolaire ou interconnecteur, et d'une cellule élémentaire de pile à combustible composée d'une cathode, d'un électrolyte et d'une anode, l'une des deux électrodes étant au contact de la plaque étanche.

D'une façon générale, il est noté que les quatre éléments constitutifs d'une unité de pile à combustible, à savoir la plaque étanche, la cathode, l'électrolyte et l'anode, sont destinés à remplir des fonctionnalités très précises et différentes, qui conditionnent le choix du/des matériaux pour leur réalisation, ainsi que la technique de fabrication à employer.

Ainsi, il est connu que la plaque étanche, habituellement utilisée pour l'amenée et l'évacuation des gaz entre deux cellules élémentaires directement consécutives, doit être un bon conducteur électronique et dense afin d'assurer une étanchéité totale entre les gaz présents au sein des deux électrodes séparées par cette plaque. A titre indicatif, la plaque étanche précitée peut également être conçue de manière à remplir uniquement la fonction de séparation étanche des deux électrodes, sans assurer l'amenée et l'évacuation des gaz qui sont alors réalisées par l'intermédiaire de moyens additionnels appropriés.

En outre, l'anode et la cathode doivent présenter une bonne conductivité électronique, et présenter une porosité suffisamment importante pour ne pas limiter l'accès des gaz à l'électrolyte.

Enfin, l'électrolyte doit être dense afin d'assurer une bonne étanchéité aux gaz, et présente uniquement une conductivité ionique.

De l'art antérieur, il est connu de réaliser séparément les cellules élémentaires et les plaques étanches, ces plaques pouvant être obtenues à l'aide de techniques de fabrication diverses, par exemple de frittage laser comme cela est décrit dans le document FR-A-2 836 282. Ensuite, il est procédé à leur assemblage.

Par conséquent, l'inconvénient majeur découlant d'une telle façon de procéder réside dans un temps de fabrication qui n'est clairement pas optimisé, et donc très coûteux. A titre indicatif, ce temps de fabrication élevé provient non seulement du nombre important d'opérations d'assemblage à effectuer, mais également de la difficulté de réalisation de ces opérations.

D'autre part, durant ces opérations d'assemblage, les cellules élémentaires et les plaques étanches doivent alors subir des manipulations qui risquent d'engendrer des détériorations non négligeables sur ceux-ci, en raison de leur fragilité due notamment à leur faible épaisseur, et à leurs matériaux fragiles. Bien entendu, toute dégradation peut également conduire à des surcoûts importants.

Enfin, il est précisé que l'assemblage des éléments entre eux requiert habituellement l'interposition de joints et de moyens de liaison mécanique, qui, en fonction de leur qualité et de leur précision d'assemblage, ne garantissent pas forcément une étanchéité certaine au sein de la pile à combustible durant tout le cycle de vie de cette dernière.

### EXPOSÉ DE L'INVENTION

L'invention a donc pour but de proposer un procédé de fabrication d'un ensemble pour pile à combustible remédiant au moins partiellement aux inconvénients mentionnés ci-dessus relatifs aux réalisations de l'art antérieur.

Pour ce faire, l'invention a pour objet un procédé de fabrication d'un ensemble pour pile à combustible comprenant au moins deux éléments de pile adjacents pris parmi une cathode, un électrolyte, une anode et une plaque étanche.

Il est mis en oeuvre à l'aide des étapes successives consistant :
a) à solidifier au moins partiellement, par frittage laser, une couche de poudre préalablement déposée de manière à ce qu'elle forme une section de l'ensemble ; et
b) à déposer une couche de poudre successive, de composition identique ou différente, sur la couche de poudre préalablement déposée et au moins partiellement solidifiée par frittage laser ;
les étapes a) et b) étant réitérées alternativement jusqu'à ce que les sections empilées obtenues, solidarisées entre elles lors de la réalisation des étapes de solidification par frittage laser, forment conjointement l'ensemble comprenant au moins deux éléments de pile de nature différente.

Selon l'invention, ce procédé est mis en oeuvre de sorte qu'au moins l'une des sections obtenues présente au moins deux zones de porosités différentes, dans le plan principal de la section obtenue.

En d'autres termes, le procédé objet de la présente invention est adapté pour réaliser, en continue, un ensemble intégrant au moins deux éléments de piles en utilisant la technique de frittage laser. Ainsi, il est clair que le temps de fabrication est largement optimisé, en ce sens qu'il n'est pas nécessaire de procéder à une étape additionnelle d'assemblage mécanique entre les éléments de pile ainsi obtenus, puisque ceux-ci sont automatiquement solidarisés les uns aux autres durant le frittage laser des couches de poudre entraînant la formation des sections constitutives de l'ensemble.

Par ailleurs, le nombre de couches de poudre superposées et au moins partiellement frittées les unes après les autres pouvant être très élevé, il est de ce fait évident que l'ensemble obtenu par mise en oeuvre du procédé selon l'invention peut aisément comporter plusieurs éléments de piles, voire une pluralité d'unités de pile, ou encore une pile à combustible dans son intégralité.

Le fait que cet ensemble se présente sous la forme d'un empilement de sections solidaires implique que les manipulations d'éléments de pile sont réduites, les risques de détérioration associés à ces manipulations étant donc relativement faibles. Ceci s'explique notamment par la diminution du nombre de manipulations à réaliser, mais également par le fait qu'un opérateur est le plus souvent amené à manipuler des ensembles de pile constitués d'éléments empilés, et non des éléments de pile unitaires dont la plus faible épaisseur accentue la fragilité.

D'autre part, il n'est pas nécessaire de prévoir des moyens de liaison mécanique additionnels entre les éléments de pile d'un même ensemble, puisque cette fonction de maintien mécanique est à présent obtenue automatiquement lors du frittage laser, cette technique procurant avantageusement un maintien extrêmement satisfaisant entre les éléments.

A ce titre, il est noté que la mise en oeuvre de la technique de frittage laser pour réaliser les différentes sections présente de nombreux avantages.

En effet, cette technique très bien maîtrisée permet de réaliser des géométries complexes à des coûts raisonnables. De cette manière, il est donc possible de fabriquer des ensembles comprenant des éléments de pile de formes complexes difficiles ou impossibles à obtenir avec d'autres techniques de fabrication habituellement utilisées dans ce domaine. Cela peut notamment être le cas pour la plaque étanche qui est susceptible d'intégrer des canaux de formes complexes afin d'assurer une bonne distribution des gaz. De façon générale, cette technique de frittage trouve un intérêt certain dès qu'il s'agit de réaliser une géométrie particulière sur l'un des quatre éléments de pile. En outre, cette technique de frittage laser autorise la réalisation de surfaces rugueuses sur les éléments de l'ensemble, qui permettent si nécessaire une bonne accroche avec un autre élément de pile, appartenant par exemple à une autre ensemble fabriqué selon ce procédé objet de l'invention. A titre d'exemple illustratif, la réalisation d'une surface rugueuse sur une plaque étanche permet une très bonne accroche de l'électrode lui étant adjacente, et permet donc l'obtention d'une liaison extrêmement rigide entre cette plaque étanche et la cellule élémentaire lui étant directement consécutive.

Par ailleurs, le fait de pouvoir réaliser des géométries complexes offre la possibilité d'envisager aisément la fabrication d'un ensemble pourvu d'un nombre important d'éléments de pile, tel qu'un ensemble comportant une cellule élémentaire et une plaque étanche.

De plus, cette technique dite de prototypage rapide, pilotée par un fichier de CAO afin d'obtenir une précision maximale sur les zones des couches de poudre à solidifier, est tout à fait adaptée pour la réalisation d'un ensemble présentant une composition et une porosité non homogène dans la direction d'empilement des sections, comme cela est le cas dans les piles à combustible.

Effectivement, une particularité de l'invention réside dans le fait de se donner la possibilité d'obtenir au moins deux éléments de piles adjacents dont la porosité et/ou la composition diffèrent, en superposant des couches de poudre de matériaux différents, présentant éventuellement des compacités différentes avant frittage. Par conséquent, cette technique de frittage laser permet avantageusement de fabriquer relativement facilement un ensemble dont chaque élément de pile présente une composition/porosité adaptées aux besoins rencontrés, notamment en termes de conductivité électronique/ionique et d'étanchéité.

Il est noté à cet égard qu'il est non seulement possible de prévoir des gradients de composition et/ou de porosité au sein d'un ensemble dans la direction d'empilement des sections, mais également, le cas échéant, de prévoir des gradients de composition et/ou de porosité au sein d'un même élément de pile de cet ensemble, toujours selon cette même direction d'empilement.

A cet égard, il est noté qu'une particularité de la présente invention réside dans le fait que le procédé est mis en oeuvre de sorte qu'au moins l'une des sections obtenues, destinée à entrer dans la constitution de l'un quelconque des éléments de pile, présente au moins deux zones de porosités différentes, ceci pouvant par exemple être réalisé par un frittage laser pratiqué de façon non homogène sur une même couche de poudre, dans le plan principal de cette couche. Plus précisément, cette caractéristique spécifique peut aisément être obtenue en modifiant les conditions d'application du frittage de cette couche (puissance du laser, etc).

Avec une telle possibilité, on peut alors envisager d'obtenir une ou plusieurs sections de l'ensemble disposant par exemple d'au moins deux zones de porosités différentes, l'une relativement poreuse et l'autre très dense. Selon l'invention ces zones servent à la réalisation d'un gradient de porosité dans un plan principal de cette même section. Cette faculté peut en outre servir à assurer l'étanchéité au niveau d'une partie ou de la totalité des extrémités libres des électrodes qui seraient alors très denses, tandis que la partie centrale de ces électrodes conserverait naturellement une porosité suffisamment importante pour ne pas limiter l'accès des gaz à l'électrolyte. A ce titre, outre la possibilité de prévoir des zones frittées densifiées pour assurer l'étanchéité au niveau des électrodes, il est alternativement possible de prévoir un ou plusieurs joints, par exemple en verre, afin de remplir cette fonction d'étanchéité.

Enfin, il est noté que la technique de frittage laser peut être mise en oeuvre de toute façon connue de l'homme du métier, en particulier celle décrite dans le document EP-A-1 058 675. Dans le cas préférentiel où il serait utilisé plusieurs matériaux lors de la mise en oeuvre de l'invention, le dispositif décrit dans ce document pourrait alors être couplé à un système de distribution de poudre capable d'alimenter ce dispositif avec plusieurs poudres de matériaux différents.

De préférence, comme cela vient d'être évoqué, le procédé est mis en oeuvre de sorte qu'au moins deux des couches de poudre présentent une composition différente, bien entendu dans le but d'obtenir des éléments de pile de compositions différentes, et/ou afin qu'au moins un élément de pile présente lui-même un gradient de composition dans la direction d'empilement des sections. Dans ce dernier cas, l'intérêt peut résider dans la possibilité de palier les effets néfastes susceptibles d'être provoqués par des différences de coefficients de dilatation thermique des divers matériaux utilisés au sein de l'ensemble. Cependant, ce gradient de composition au sein d'un même élément de pile permet également, à titre d'exemple illustratif, d'augmenter la surface réactionnelle au niveau des électrodes, en raison du caractère « tridimensionnel » de cette surface réactionnelle.

De préférence, le procédé est mis en oeuvre de sorte qu'au moins deux des couches de poudre présentent une épaisseur différente. Les couches de poudre nécessaires à la formation des sections destinées à constituer un élément de pile particulier de l'ensemble peuvent effectivement être amenées à présenter une épaisseur différente de celle des couches de poudre nécessaires à la formation des sections destinées à constituer un autre élément de pile de cet ensemble. Bien évidemment, ici encore, l'épaisseur des couches participant à la formation d'un même élément de pile est également susceptible de varier, en fonction des besoins rencontrés.

De plus, on peut prévoir qu'au moins l'une des couches de poudre est compactée avant d'être au moins partiellement solidifiée par frittage. Ce compactage préalable permet d'obtenir une section après frittage qui soit plus dense que si elle n'avait pas été compactée.

A titre d'exemple illustratif, le compactage peut être réalisé d'une façon identique ou similaire à celle exposée dans le document EP-A-1 058 675, ou de toute autre manière connue de l'homme du métier:

Toujours de façon préférentielle, le procédé est mis en oeuvre de sorte qu'au moins deux des sections obtenues présentent une porosité différente. Cette caractéristique peut être obtenue en modifiant la composition de la poudre utilisée, en faisant varier les conditions d'application du frittage laser (puissance du laser, etc), en ajoutant un porogène à la poudre ou au mélange de poudres, et/ou encore en réalisant un/des compactages préalables tels que celui exposé ci-dessus.

Naturellement, cette spécificité permet essentiellement de fabriquer un ensemble pour pile dont chacun des éléments de cet ensemble présente la porosité appropriée, étant à cet égard rappelé que chacune des sections constitutives de ces éléments de pile est elle-même susceptible de présenter un gradient de porosité dans son plan principal.

Il est précisé que la spécificité selon laquelle au moins deux des sections obtenues présentent une porosité différente apparaît relativement avantageuse en ce sens que deux éléments adjacents d'une pile à combustible sont susceptibles de disposer d'une porosité bien différente, notamment lorsqu'il s'agit d'une électrode et de l'électrolyte.

De préférence, l'ensemble est constitué par une anode, un électrolyte et une cathode, formant conjointement une cellule élémentaire de pile à combustible.

Une autre possibilité réside dans le fait de fabriquer, toujours en continue, un ensemble dit unité de pile à combustible, constitué par une plaque étanche et une cellule élémentaire de pile à combustible composée d'une anode, d'un électrolyte et d'une cathode. Dans un tel cas, la jonction entre la plaque étanche et la cellule élémentaire, obtenue directement lors du frittage laser, est avantageusement très satisfaisante.

Aussi, l'ensemble peut être constitué par une pluralité d'unités adjacentes de pile à combustible, chaque unité étant constituée d'une plaque étanche et d'une cellule élémentaire de pile à combustible composée d'une anode, d'un électrolyte et d'une cathode. Dans ce dernier cas, c'est donc l'intégralité de la pile à combustible qui peut être obtenue de façon continue, par frittage laser de couches de poudre empilées.

Naturellement, toute autre association d'éléments de pile adjacents est envisageable.

A titre d'exemple illustratif, la/les poudres utilisées pour réaliser les couches sont choisies dans le groupe constitué des poudres céramiques, des poudres métalliques, des poudres d'alliages métalliques, des poudres composites céramique-métal, et des mélanges des poudres précitées. Par ailleurs, il est noté que des produits organiques peuvent être ajoutés à ces poudres ou mélanges de poudres.

Enfin, il est indiqué que l'ensemble est préférentiellement destiné à la constitution d'une pile à combustible à oxyde solide (SOFC).

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures 1A à 1F représentent différentes vues schématisant des étapes successives d'un procédé de fabrication mis en oeuvre de manière à obtenir un ensemble constitué par une cellule élémentaire de pile à combustible visible sur la figure 1F ;
- la figure 2 est une vue partielle similaire à celle de la figure 1F, représentant une partie d'une cellule élémentaire de pile à combustible susceptible d'être obtenue lors de la mise en oeuvre d'un mode de réalisation préféré du procédé objet de la présente invention ;
- la figure 3 représente une vue d'une unité de pile à combustible susceptible d'être obtenue lors de la mise en oeuvre d'un autre procédé objet de la présente invention ; et
- la figure 4 représente une vue d'une pluralité d'unités adjacentes de pile à combustible susceptibles d'être obtenues conjointement lors de la mise en oeuvre d'un autre mode de réalisation préféré du procédé objet de la présente invention.

### EXPOSÉ DÉTAILLÉ DE MODES DE RÉALISATION PRÉFÉRÉS

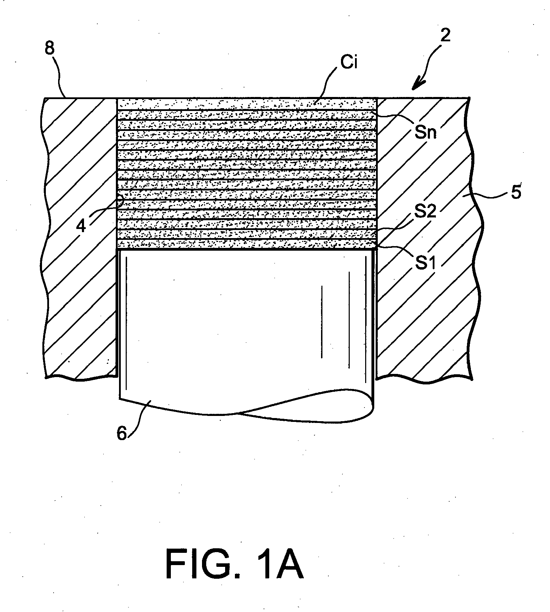

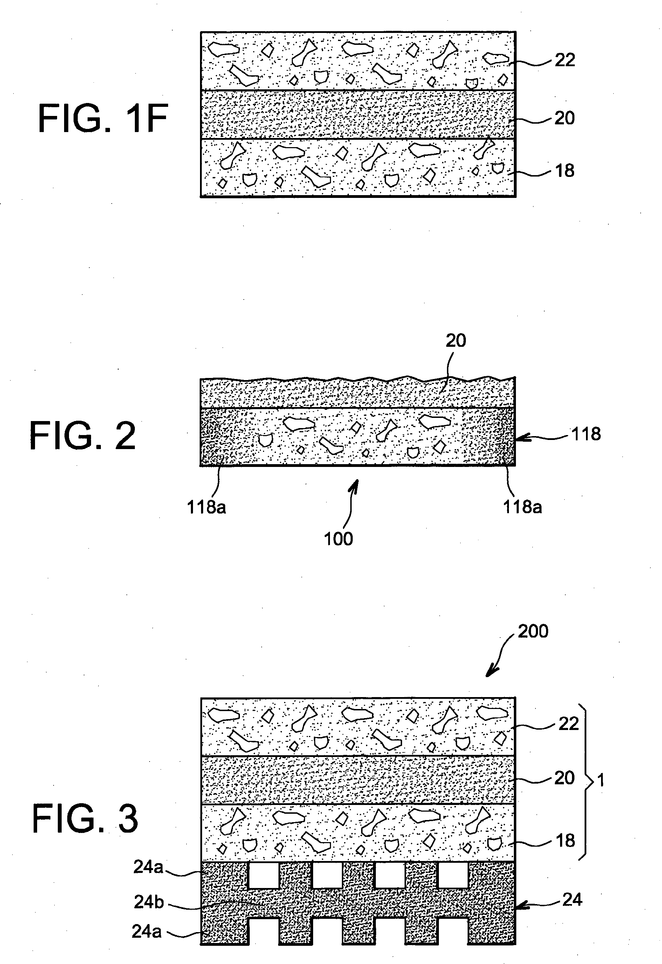

Tout d'abord en référence aux figures 1A à 1F, il est représenté schématiquement, dans l'ordre chronologique, différentes étapes d'un procédé de fabrication non couvert par la présente invention mais utile à sa compréhension, dont le but est de réaliser par frittage laser un ensemble 1 pour pile à combustible prenant ici la forme d'une cellule élémentaire de pile, visible sur la figure 1F.

Pour la mise en oeuvre de ce procédé, on peut utiliser un dispositif de prototypage rapide tel que celui décrit dans le document EP-A-1 058 675, qui est incorporé à la présente par référence. Naturellement, tout autre dispositif connu de l'homme du métier et capable d'assurer un frittage laser de couches de poudre aurait pu être retenu, sans sortir du cadre de l'invention.

Globalement, ce dispositif de prototypage rapide 2 partiellement représenté sur la figure 1A comporte un cylindre 4 pratiqué dans un bâti 5 et définissant une cavité délimitée vers le bas par un piston 6. Le cylindre 4 et l'ensemble 1 susceptible d'être obtenu par le procédé peuvent bien entendu disposer de toute forme connue de l'homme du métier, sans sortir du cadre de l'invention.

A l'intérieur de ce cylindre 4, on peut voir une couche de poudre Ci qui a été déposée sur un support constitué à base d'une couche de poudre ayant été préalablement déposée puis au moins partiellement solidifiée par frittage laser, de manière à former une section Sn de l'ensemble. Ainsi, il est à comprendre que la couche de poudre Ci repose à la fois sur la partie solidifiée du support constituée par la section Sn, ainsi que sur les éventuelles parties non solidifiées de ce support prenant la forme de résidus de poudre.

Comme on peut clairement l'apercevoir sur cette figure 1A, la couche de poudre Ci est déposée de manière à reposer sur la surface supérieure du support intégrant la section Sn, et de sorte qu'elle présente une surface supérieure agencée dans un même plan qu'un plan de travail 8 défini par le bâti 5. A titre indicatif, le dépôt de cette couche de poudre Ci peut être effectué à l'aide d'un rouleau chanfreiné ou d'un rouleau classique (non représentés) comme celui décrit dans le document EP-A-1 058 675, la poudre retenue pouvant alors provenir d'un système de distribution de poudre (non représenté) capable d'alimenter ce dispositif 2 avec plusieurs poudres de matériaux différents. Dans un tel cas, ce système de distribution de poudres de matériaux différents se substituerait alors au second cylindre du dispositif décrit dans le document EP-A-1 058 675, constituant un unique réservoir de poudre.

Toujours à titre indicatif, une fois que la couche Ci est déposée et occupe la totalité de l'espace qui lui est alloué dans la partie supérieure du cylindre 4, cette couche Ci peut, si nécessaire, être soumise à un compactage afin d'augmenter la densité avant frittage, ce compactage étant par exemple mis en oeuvre à l'aide d'un rouleau comme décrit dans le document EP-A-1 058 675, ou à l'aide de toute autre technique connue de l'homme du métier.

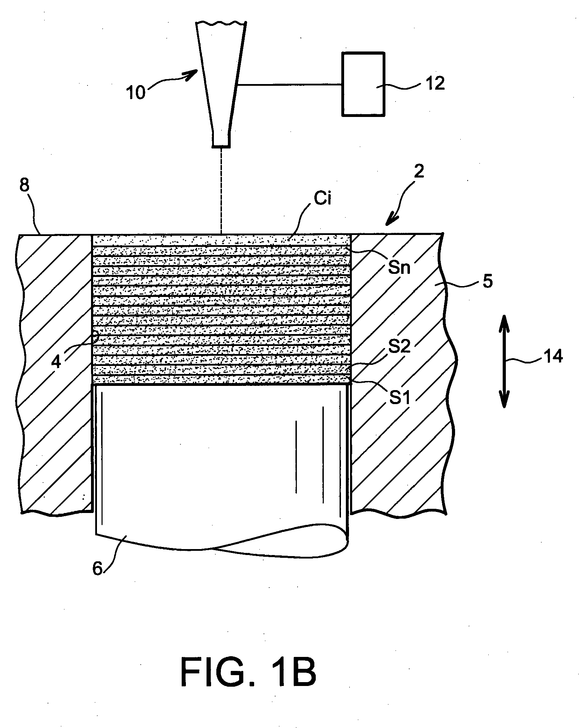

La couche de poudre Ci, dont la compacité avant frittage, l'épaisseur et le/les matériaux constitutifs sont déterminés en fonction de la nature de la section que l'on désire obtenir, est ensuite soumise à une étape de solidification au moins partielle, par frittage laser, de préférence à l'aide d'une source laser 10 représentée schématiquement sur la figure 1B.

Cette source laser 10 est pilotée par des moyens informatiques 12 comportant un fichier CAO qui permet de solidifier avec précision uniquement les parties voulues de la couches de poudres Ci, les autres parties de cette couche restant donc à l'état de poudre. Bien entendu, les parties solidifiées de la couche Ci sont déterminées en fonction des caractéristiques de la section que l'on désire obtenir, qui est quant à elle destinée à constituer ultérieurement une portion de l'un des éléments de pile de l'ensemble 1. De ce fait, il est à comprendre que cette couche Ci pourrait naturellement être amenée à être entièrement solidifiée par frittage laser, sans laisser subsister de résidu de poudre.

En outre, il est rappelé que la possibilité de faire varier les paramètres de frittage laser (puissance, vitesse, balayage du laser, etc.) constitue un autre moyen susceptible d'influencer la porosité finale de la section obtenue par frittage laser.

Il est également noté que cette étape de solidification par frittage est mise en oeuvre de sorte que les parties à solidifier de la couche Ci se solidifient en même temps qu'elles se solidarisent à la section Sn du support.

A titre indicatif, la poudre de la couche Ci peut être maintenue à une température donnée avant le frittage, par exemple au maximum à 900°C, afin d'augmenter la rapidité de cette étape de solidification, et dans le but de réduire l'énergie devant être apportée par la source laser 10.

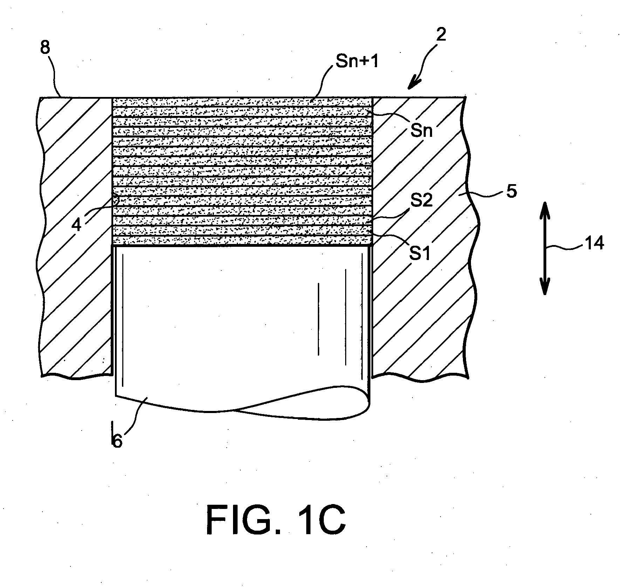

Une fois la solidification de la couche Ci achevée, cette dernière prend alors la forme d'une section Sn+1 de l'ensemble éventuellement accompagnée de résidus de poudre, comme cela se voit de manière schématique sur la figure 1C.

La cavité définie par le cylindre 4 est alors comblée par une pluralité de sections S1, S2... à Sn+1 qui sont empilées selon une direction d'empilement des sections 14 parallèle à une direction de déplacement (non référencée) du piston 6, et qui ont toutes été réalisées successivement par frittage laser à base d'une couche de poudre de caractéristiques judicieusement déterminées (composition, épaisseur, compactage avant frittage, etc). De plus, ces sections solides S1, S2... à Sn+1 sont solidarisées entre elles, et sont éventuellement associées à des parties non solidifiées restantes se présentant toujours à l'état de poudre.

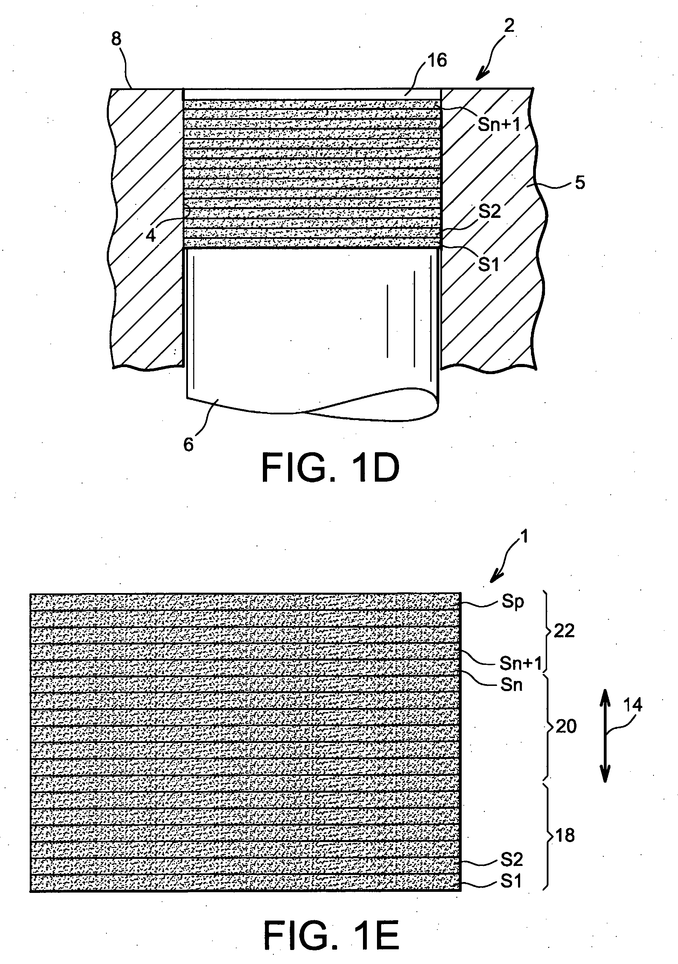

La mise en oeuvre du procédé est poursuivie en abaissant le piston 6 d'une distance égale à l'épaisseur de la couche de poudre suivante Ci+1 (non représentée) que l'on souhaite déposer, comme cela est visible sur la figure 1D. Effectivement, l'abaissement du piston 6 a pour conséquence de libérer un espace 16 au niveau de la partie supérieure du cylindre 4, dans lequel pourra être déposée la couche Ci+1 précitée, destinée elle aussi à subir une solidification par frittage laser.

Ainsi, ces étapes de solidification par frittage laser et de dépôt de couche de poudre successive sont réitérées alternativement autant de fois que nécessaire, jusqu'à obtenir un nombre « p » de sections constituant conjointement l'ensemble 1 pourvu des trois éléments de piles 18, 20 et 22.

Sur la figure 1E, l'ensemble 1 extrait du cylindre 4 et muni des sections S1, S2... à Sp est représenté dans une configuration qui n'est pas encore finale, puisqu'il se présente sous la forme d'un bloc intégrant non seulement les sections indiquées ci-dessus, mais également les éventuels résidus de poudre correspondant aux parties non solidifiées durant les opérations de frittage.

Pour cette raison, afin d'obtenir la cellule élémentaire de pile à combustible représentée sur la figure 1F et également indiquée par la référence numérique 1, il est procédé à une élimination de ces résidus de poudre, par exemple par simple évacuation des grains de poudre pouvant facilement s'extraire du bloc. Une fois cette étape réalisée, on voit alors apparaître l'anode 18, l'électrolyte 20 ainsi que la cathode 22 de cette cellule élémentaire ou ensemble 1, qui peut présenter globalement un gradient de composition ainsi qu'un gradient de porosité dans la direction d'empilement 14. Comme indiqué précédemment, ce sont chacun des éléments de pile 18, 20, 22 qui peuvent éventuellement présenter des gradients de composition et de porosité dans cette même direction d'empilement.

Toujours à titre d'exemple indicatif, il est précisé qu'il peut être envisagé d'effectuer un traitement thermique dans un four de cet ensemble 1 et/ou une refusion laser au cours de la fabrication de la couche à traiter, dans le but d'améliorer la densification de certaines sections, telles que celles destinées à constituer l'électrolyte, et éventuellement celles destinées à constituer la plaque étanche lorsque celle-ci doit faire partie intégrante de l'ensemble se présentant d'un seul tenant et étant obtenu de façon continue à l'aide du dispositif de prototypage rapide 2.

A cet égard, même si cela n'est pas représenté sur les figures 1A à 1F, il est noté que l'une des spécificités de la présente invention réside dans le fait d'obtenir au moins une section présentant au moins deux zones de porosité différentes, ceci étant par exemple réalisé en modifiant les paramètres de frittage durant la solidification par frittage d'une couche de poudre donnée. Ces différentes zones, prévues sur une/des sections destinées à constituer l'un quelconque des éléments de pile en fonction des besoins rencontrés, servent à la réalisation d'un gradient de porosité dans un plan principal de la section concernée.

En référence à présent à la figure 2, on peut voir une partie d'un ensemble ou cellule élémentaire 100 de pile à combustible susceptible d'être obtenue lors de la mise en oeuvre d'un mode de réalisation préféré de la présente invention.

En effet, pour obtenir cette cellule 100, le procédé employé est similaire à celui exposé ci-dessus, la spécificité résidant ici dans la réalisation de sections constitutives de l'anode 188 présentant au moins deux zones de porosités différentes, de manière à former un gradient de porosité dans un plan principal de cette section. Le fait de disposer de zones de porosités différentes, également offerte à la cathode (non représentée sur la figure 2) et/ou à l'électrolyte 20, sert essentiellement à assurer l'étanchéité au niveau d'une partie ou de la totalité des extrémités libres 118a de l'anode 118, qui seraient alors très denses. Effectivement, lorsque chaque section constitutive de l'anode est réalisée de manière à présenter une partie centrale relativement poreuse et une/des extrémités très denses, ce sont alors ces dernières qui forment conjointement les extrémités libres 118a très denses de l'anode 118. Ainsi, d'une manière générale, lors du frittage de chaque section destinée à la constitution d'une électrode, le frittage laser s'effectue de manière à obtenir au moins une zone d'extrémité densifiée par rapport à une zone centrale.

Il est également précisé que lorsque l'ensemble est destiné à présenter une section circulaire, chaque électrode dispose alors d'une unique extrémité libre en forme de portion annulaire densifiée en partie ou en intégralité pour assurer l'étanchéité.

En référence à la figure 3, on peut voir un ensemble ou unité 200 de pile à combustible susceptible d'être obtenue en continue lors de la mise en oeuvre d'un autre mode de réalisation préféré de la présente invention.

Ainsi, pour mettre en oeuvre ce mode de réalisation, le nombre de couches de poudre à déposer puis à fritter doit être augmenté par rapport à celui rencontré dans le mode de réalisation mis en oeuvre de manière à obtenir un ensemble constitué par une cellule élémentaire de pile à combustible visible sur la figure 1F, puisque les sections solidarisées les unes aux autres et se présentant d'un seul tenant doivent non seulement constituer la cellule élémentaire 1, 100, mais également une plaque étanche 24.

A ce titre, il est précisé que la plaque étanche 24 peut indifféremment être solidarisée à l'anode 18 ou à la cathode 22. Par ailleurs, les caractéristiques des sections formées à base de couches de poudre frittées et constituant cette plaque étanche 24 sont notamment déterminées en fonction des fonctionnalités associées à cette plaque. En effet, cette dernière peut avoir pour rôle d'assurer l'amenée et l'évacuation des gaz de part et d'autre d'une portion centrale étanche 24a (cas représenté sur la figure 3). Pour ce faire, la plaque 24 dispose alors de façon connue de deux zones 24b de canaux de formes complexes agencées de chaque côté de la portion étanche 24a. Cependant, les cas où cette plaque étanche serait munie d'une unique zone destinée à être traversée par les gaz, ou encore seulement pourvue d'une portion étanche, sont également couverts par la présente invention. A cet égard, il est noté que ces plaques étanches sont habituellement appelées plaques bipolaires ou interconnecteur.

Bien entendu, dans ce mode de réalisation, il est également prévu d'obtenir au moins une section présentant au moins deux zones de porosité différentes, ceci étant par exemple réalisé en modifiant les paramètres de frittage durant la solidification par frittage d'une couche de poudre donnée.

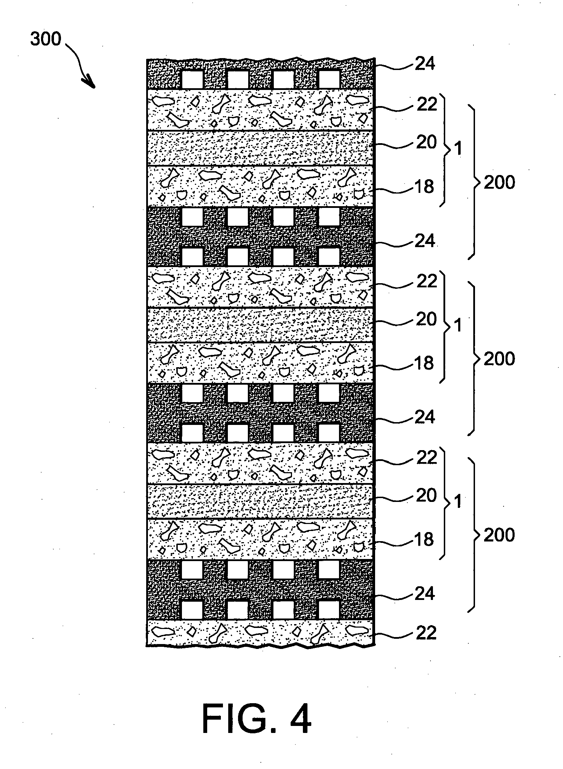

Enfin, en référence à la figure 4, on peut voir une pluralité d'unités adjacentes de pile à combustible ou ensemble 300, susceptibles d'être obtenues en continue lors de la mise en oeuvre d'un autre mode de réalisation préféré de la présente invention.

Dans ce mode de réalisation préféré, il est donc envisagé de réaliser un ensemble 300 d'une seule pièce composé de plusieurs unités de pile 200 empilées dans la direction d'empilement des sections, telle que celle visible sur la figure 3. De ce fait, en réitérant autant de fois que nécessaire le dépôt de couches de poudre et leur frittage, il est alors avantageusement possible d'aboutir à un empilement d'éléments constituant l'intégralité de la pile à combustible.

Comme cela a été décrit ci-dessus, dans tous les modes de réalisation préférés, il est important de noter que l'étanchéité de l'ensemble, principalement au niveau des électrodes, est préférentiellement assurée lors de la fabrication de cet ensemble, de préférence en densifiant une zone / des zones d'extrémité de ces électrodes, et/ou encore en ajoutant un joint (non représenté) en verre.

### Exemple de réalisation

### Anode :

- composition : cermet : nickel, zircone yttriée
- porosité : entre environ 10 et 50%
- épaisseur : entre environ 20 et 50 µm

### Electrolyte :

- composition : zircone yttriée
- porosité : inférieure à environ 5%
- épaisseur : entre environ 20 et 100 µm

### Cathode :

- composition : manganite de lanthane dopée au strontium
- porosité : entre environ 10 et 50%
- épaisseur : entre environ 20 et 50 µm

### Plaque étanche (interconnecteur) :

- composition : chromite de lanthane
- porosité : inférieure à environ 5%
- épaisseur : entre environ 10 µm et environ 5 mm

Nombre de couches de poudre par élément de pile de l'ensemble : environ 1 à 10.

## Revendications

1. Procédé de fabrication d'un ensemble (1, 100, 200, 300) pour pile à combustible comprenant au moins deux éléments de pile adjacents pris parmi une cathode (22), une anode (18, 118), un électrolyte (20) et une plaque étanche (24), ledit procédé étant mis en oeuvre à l'aide des étapes successives consistant :
a) à solidifier au moins partiellement, par frittage laser, une couche de poudre (Ci) préalablement déposée de manière à ce qu'elle forme une section (Sn+1) de l'ensemble ; et
b) à déposer une couche de poudre successive (Ci+1) sur la couche de poudre (Ci) préalablement déposée et au moins partiellement solidifiée par frittage laser ;
les étapes a) et b) étant réitérées alternativement jusqu'à ce que les sections empilées obtenues (S1-Sp), solidarisées entre elles lors de la réalisation des étapes de solidification par frittage laser, forment conjointement l'ensemble comprenant au moins deux éléments de pile (18, 118, 20, 22, 24),
**caractérisé en ce qu'**il est mis en oeuvre de sorte qu'au moins l'une des sections obtenues (S1-Sp) présente au moins deux zones de porosités différentes, dans le plan principal de ladite section obtenue (S1-Sp).

2. Procédé de fabrication d'un ensemble (1, 100, 200, 300) pour pile à combustible selon la revendication 1, **caractérisé en ce qu'**il est mis en oeuvre de sorte qu'au moins deux des couches de poudre (Ci, Ci+1) présentent une composition différente.

3. Procédé de fabrication d'un ensemble (1, 100, 200, 300) pour pile à combustible selon la revendication 1 ou la revendication 2, **caractérisé en ce qu'**il est mis en oeuvre de sorte qu'au moins deux des couches de poudre (Ci, Ci+1) présentent une épaisseur différente.

4. Procédé de fabrication d'un ensemble (1, 100, 200, 300) pour pile à combustible selon l'une quelconque des revendications précédentes, **caractérisé en ce qu'**au moins l'une des couches de poudre (Ci, Ci+1) est compactée avant d'être au moins partiellement solidifiée par frittage laser.

5. Procédé de fabrication d'un ensemble (1, 100, 200, 300) pour pile à combustible selon l'une quelconque des revendications précédentes, **caractérisé en ce qu'**il est mis en oeuvre de sorte qu'au moins deux des sections obtenues (S1-Sp) présentent une porosité différente.

6. Procédé de fabrication d'un ensemble (1, 100) pour pile à combustible selon l'une quelconque des revendications précédentes, **caractérisé en ce que** cet ensemble est constitué par une anode (18, 118), un électrolyte (20) et une cathode (22), formant conjointement une cellule élémentaire de pile à combustible.

7. Procédé de fabrication d'un ensemble (200) pour pile à combustible selon l'une quelconque des revendications 1 à 5, **caractérisé en ce que** cet ensemble est constitué par une plaque étanche (24) et une cellule élémentaire de pile à combustible composée d'une anode (18, 118), d'un électrolyte (20) et d'une cathode (22).

8. Procédé de fabrication d'un ensemble (300) pour pile à combustible selon l'une quelconque des revendications 1 à 5, **caractérisé en ce que** cet ensemble est constitué par une pluralité d'unités adjacentes (200) de pile à combustible, chaque unité étant constituée d'une plaque étanche (24) et d'une cellule élémentaire de pile à combustible composée d'une anode (18, 118), d'un électrolyte (20) et d'une cathode (22).

9. Procédé de fabrication d'un ensemble (1, 100, 200, 300) pour pile à combustible selon l'une quelconque des revendications précédentes, **caractérisé en ce que** la/les poudres utilisées pour réaliser les couches (Ci, Ci+1) sont choisies dans le groupe constitué des poudres céramiques, des poudres métalliques, des poudres d'alliages métalliques, des poudres composites céramique-métal, et des mélanges des poudres précitées.

10. Procédé de fabrication d'un ensemble (1, 100, 200, 300) pour pile à combustible selon la revendication 9, **caractérisé en ce que** des produits organiques sont ajoutés à la/aux poudres utilisées pour réaliser les couches (Ci, Ci+1).

11. Procédé de fabrication d'un ensemble (1, 100, 200, 300) pour pile à combustible selon l'une quelconque des revendications précédentes, **caractérisé en ce que** l'ensemble est destiné à la constitution d'une pile à combustible à oxyde solide (SOFC).

## Patentansprüche

1. Verfahren zur Herstellung einer Anordnung (1, 100, 200, 300) für eine Brennstoffzelle, umfassend wenigstens zwei benachbarte Zellen-Elemente, genommen aus einer Kathode (22), einer Anode (18, 118), einem Elektrolyten (20) und einer Dichtplatte (24), wobei das Verfahren mithilfe der aufeinander folgenden Schritte ausgeführt wird, welche darin bestehen:
a) wenigstens teilweise eine Pulverschicht (Ci) durch Laser-Sintern zu verfestigen, welche zuvor so aufgebracht wurde, dass sie einen Abschnitt (Sn+1) der Anordnung bildet, und
b) eine nachfolgende Pulverschicht (Ci+1) auf die zuvor aufgebrachte und wenigstens teilweise durch Laser-Sintern verfestigte Pulverschicht (Ci) aufzubringen,
wobei die Schritte a) und b) abwechselnd wiederholt werden, bis die erhaltenen, aufeinander gestapelten Abschnitte (S1-Sp), die miteinander bei der Ausführung der Schritte der Verfestigung durch Laser-Sintern verbunden wurden, zusammen die Anordnung bilden, welche wenigstens zwei Zellen-Elemente (18, 118, 20, 22, 24) umfasst,
**dadurch gekennzeichnet, dass** es so ausgeführt wird, dass wenigstens einer der erhaltenen Abschnitte (S1-Sp) wenigstens zwei Bereiche mit unterschiedlichen Porositäten in der Hauptebene von dem erhaltenen Abschnitt (S1-Sp) aufweist.

2. Verfahren zur Herstellung einer Anordnung (1, 100, 200, 300) für eine Brennstoffzelle nach Anspruch 1, **dadurch gekennzeichnet, dass** es so ausgeführt wird, dass wenigstens zwei Pulverschichten (Ci, Ci+1) eine unterschiedliche Zusammensetzung aufweisen.

3. Verfahren zur Herstellung einer Anordnung (1, 100, 200, 300) für eine Brennstoffzelle nach Anspruch 1 oder Anspruch 2, **dadurch gekennzeichnet, dass** es so durchgeführt wird, dass wenigstens zwei der Pulverschichten (Ci, Ci+1) eine unterschiedliche Dicke aufweisen.

4. Verfahren zur Herstellung einer Anordnung (1, 100, 200, 300) für eine Brennstoffzelle nach einem der vorhergehenden Ansprüche, **dadurch gekennzeichnet, dass** wenigstens eine der Pulverschichten (Ci, Ci+1) kompaktiert wird, bevor sie wenigstens teilweise durch Laser-Sintern verfestigt wird.

5. Verfahren zur Herstellung einer Anordnung (1, 100, 200, 300) für eine Brennstoffzelle nach einem der vorhergehenden Ansprüche, **dadurch gekennzeichnet, dass** es so ausgeführt wird, dass wenigstens zwei der erhaltenen Abschnitte (S1-Sp) eine unterschiedliche Porosität aufweisen.

6. Verfahren zur Herstellung einer Anordnung (1, 100) für eine Brennstoffzelle nach einem der vorhergehenden Ansprüche, **dadurch gekennzeichnet, dass** die Anordnung durch eine Anode (18, 118), einen Elektrolyten (20) und eine Kathode (22) gebildet ist, welche zusammen eine Elementarzelle der Brennstoffzelle bilden.

7. Verfahren zur Herstellung einer Anordnung (200) für eine Brennstoffzelle nach einem der Ansprüche 1 bis 5, **dadurch gekennzeichnet, dass** die Anordnung durch eine Dichtplatte (24) und eine Elementarzelle der Brennstoffzelle gebildet ist, welche aus einer Anode (18, 118), einem Elektrolyten (20) und einer Kathode (22) zusammengesetzt ist.

8. Verfahren zur Herstellung einer Anordnung (300) für eine Brennstoffzelle nach einem der Ansprüche 1 bis 5, **dadurch gekennzeichnet, dass** die Anordnung durch eine Mehrzahl von benachbarten Einheiten (200) der Brennstoffzelle gebildet ist, wobei jede Einheit aus einer Dichtplatte (24) und einer Elementarzelle der Brennstoffzelle gebildet ist, welche aus einer Anode (18, 118), einem Elektrolyten (20) und einer Kathode (22) zusammengesetzt ist.

9. Verfahren zur Herstellung einer Anordnung (1, 100, 200, 300) für eine Brennstoffzelle nach einem der vorhergehenden Ansprüche, **dadurch gekennzeichnet, dass** das/die Pulver, das/die benutzt wird/werden, um die Schichten (Ci, Ci+1) herzustellen, ausgewählt ist/sind aus der Gruppe, die gebildet ist aus: keramischen Pulvern, metallischen Pulvern, Pulvern aus Metall-Legierungen, Pulvern aus Keramik-Metall-Zusammensetzungen und Mischungen der vorgenannten Pulver.

10. Verfahren zur Herstellung einer Anordnung (1, 100, 200, 300) für eine Brennstoffzelle nach Anspruch 9, **dadurch gekennzeichnet, dass** organische Produkte dem/den verwendeten Pulver/Pulvern hinzugefügt werden, um die Schichten (Ci, Ci+1) herzustellen.

11. Verfahren zur Herstellung einer Anordnung (1, 100, 200, 300) für eine Brennstoffzelle nach einem der vorhergehenden Ansprüche, **dadurch gekennzeichnet, dass** die Anordnung für die Bildung einer Festoxid-Brennstoffzelle (SOFC) bestimmt ist.

## Claims

1. A method for manufacturing an assembly (1, 100, 200, 300) for a fuel cell comprising at least two adjacent cell components taken from a cathode (22), and anode (18, 118), an electrolyte (20) and a sealed plate (24), said method being applied by means of successive steps consisting of:
a) at least partially solidifying, by laser sintering, a powder layer (Ci) deposited beforehand so that it forms a section (Sn+1) of the assembly; and
b) depositing a successive powder layer (Ci+1) on the powder layer (Ci) deposited beforehand, and at least partially solidified by laser sintering;
steps a) and b) being alternately repeated until the obtained stacked sections (S1-Sp), made integral with each other during the carrying out of the solidification steps by laser sintering, form together the assembly comprising at least two cell components (18, 118, 20, 22, 24),
**characterized in that** it is applied so that at least one of the obtained sections (S1-Sp) has at least two areas with different porosities, in the main plane of the obtained section (S1-Sp).

2. The method for manufacturing an assembly (1, 100, 200, 300) for a fuel cell according to claim 1, **characterized in that** it is applied so that at least two of the powder layers (Ci, Ci+1) have a different composition.

3. The method for manufacturing an assembly (1, 100, 200, 300) for a fuel cell according to claim 1 or claim 2, **characterized in that** it is applied so that at last two of the powder layers (Ci, Ci+1) have a different thickness.

4. The method for manufacturing an assembly (1, 100, 200, 300) for a fuel cell according to any of the preceding claims, **characterized in that** at least one of the powder layers (Ci, Ci+1) is compacted before being at least partially solidified by laser sintering.

5. The method for manufacturing an assembly (1, 100, 200, 300) for a fuel cell according to any of the preceding claims, **characterized in that** it is applied so that at least two of the obtained sections (S1-Sp) have different porosity.

6. The method for manufacturing an assembly (1, 100) for a fuel cell according to any of the preceding claims, **characterized in that** this assembly is formed by an anode (18, 118), and electrolyte (20) and a cathode (22), forming together an elementary cell of a fuel cell.

7. The method for manufacturing an assembly (200) for a fuel cell according to any of claims 1 to 5, **characterized in that** this assembly is formed by a sealed plate (24) and an elementary cell of a fuel cell consisting of an anode (18, 118), an electrolyte (20) and a cathode (22).

8. The method for manufacturing an assembly (300) for a fuel cell according to any of claims 1 to 5, **characterized in that** this assembly is formed by a plurality of adjacent fuel cell units (200), each unit consisting of a sealed plate (24) and of an elementary cell of a fuel cell, consisting of an anode (18, 118), an electrolyte (20) and a cathode (22).

9. The method for manufacturing an assembly (1, 100, 200, 300) for a fuel cell according to any of the preceding claims, **characterized in that** the powder(s) used for making the layers (Ci, Ci+1) are selected from the group formed by ceramic powders, metal powders, metal alloy powders, ceramic-metal composite powders and mixtures of the aforementioned powders.

10. The method for manufacturing an assembly (1, 100, 200, 300) for a fuel cell according to claim 9, **characterized in that** organic products are added to the powder(s) used for making the layers (Ci, Ci+1).

11. The method for manufacturing an assembly (1, 100, 200, 300) for a fuel cell according to any of the preceding claims, **characterized in that** the assembly is intended to form a solid oxide fuel cell (SOFC).
